# EUROPÄISCHE PATENTSCHRIFT

(11) **EP 4 175 809 B1**
(45) Veröffentlichungstag und Bekanntmachung des Hinweises auf die Patenterteilung: **17.12.2025**
(21) Anmeldenummer: 21737409.9
(22) Anmeldetag: 28.06.2021
(51) Int. Cl.: B29C 44/42, B29C 44/34, B29C 44/58

(54) **VERFAHREN ZUR HERSTELLUNG VON BAUTEILEN**
METHOD FOR PRODUCING COMPONENTS
PROCÉDÉ DE PRODUCTION DE COMPOSANTS

(30) Priorität: 02.07.2020 AT 1482020
(43) Veröffentlichungstag der Anmeldung: 10.05.2023
(73) Patentinhaber: Getzner Werkstoffe Holding GmbH, 6706 Bürs (AT)
(72) Erfinder: DIETRICH, Martin, 6830 Rankweil (AT); KESSLER, Michael, 6714 Nüziders (AT); WENZKE, Nicolai, 91448 Emskirchen (DE)
(74) Vertreter: Torggler & Hofmann Patentanwälte - Rankweil
(86) Internationale Anmeldenummer: PCT/EP2021/067601
(87) Internationale Veröffentlichungsnummer: WO 2022/002806

(56) Entgegenhaltungen:
- EP-A1- 1 266 928
- AT-U1- 9 383
- DE-A1- 10 161 029
- DE-A1- 102005 052 347
- DE-A1- 102008 061 604
- DE-A1- 4 304 751

## Beschreibung

Die vorliegende Erfindung betrifft ein Verfahren gemäß des Oberbegriffs des Patentanspruchs 1.

Beim Stand der Technik ist es bekannt, Bauteile aus einem thermoplastischen Elastomer mit einer Spritzgussmaschine herzustellen, wobei der Schmelze im Extruderrohr über einen Injektor Gas zugeführt wird, sodass das letztendlich hergestellte Bauteil eine gewisse Porosität aufweist. Solche Spritzgusstechnologien werden z.B. dazu eingesetzt, um für die Herstellung des jeweiligen Bauteils durch die mit dem Gas erzeugte Porosität im Bauteil weniger Material pro Bauteil zu verbrauchen.

Darüber hinaus ist es beim Stand der Technik auch bekannt, geschäumte Kunststoffe wie z.B. Polyurethan zur Schwingungsisolierung bei Maschinen, Gebäuden, Verkehrswegen und dergleichen einzusetzen. Die geschäumten Polyurethane werden allerdings nicht im Spritzguss sondern in einem an sich bekannten Aufschäumprozess hergestellt.

Die AT 009 383 U1 offenbart ein Verfahren gemäß dem Oberbegriff des Anspruchs 1.

Aufgabe der Erfindung ist es, ein Verfahren der oben genannten Art dahingehend zu verbessern, dass Bauteile aus einem thermoplastischen Elastomer im Spritzgussverfahren hergestellt und dann gezielt zur Schwingungsisolierung eingesetzt werden können.

Zur Lösung dieser Aufgabe wird ein Verfahren gemäß Patentanspruch 1 vorgeschlagen.

Kerngedanke dieses Verfahrens ist es, die mit Gas im Extruderrohr angereicherte Schmelze in den Formhohlraum einzuspritzen und dann das Volumen der mit dem Gas angereicherten Schmelze durch Aufschäumen im Formhohlraum der Spritzgussform zu vergrößern. Durch diesen Aufschäumvorgang in der Spritzgussform gezielt ein Bauteil hergestellt werden, so dass dann am Ende des Aufschäumvorgangs im Innenbereich des fertig hergestellten Bauteils ein Schäumgrad im Wertebereich von 30% bis 70%, vorzugsweise von 50% bis 60%, vorliegt. Der Schäumgrad ist dabei ein Maß für die durch den Aufschäumvorgang im Bauteil entstandene Porosität. Der Schäumgrad in Prozent berechnet sich aus dem Verhältnis der Dichte des Endprodukts zur Dichte des Rohmaterials, wobei dieser Quotient mit 100% multipliziert wird. Das Endprodukt ist dabei der entsprechende Innenbereich des Bauteils. Das Rohmaterial ist das thermoplastische Elastomer, welches dann im Extruderrohr der Spritzgussmaschine verarbeitet wird.

Es hat sich gezeigt, dass mit dem erfindungsgemäßen Verfahren hergestellte Bauteile aufgrund ihres hohen Schäumgrades elastische Eigenschaften aufweisen, welche diese Bauteile zum Einsatz in der Schwingungsisolierung bei Maschinen, Fahrwegen, Gebäuden und dergleichen qualifizieren. Die erfindungsgemäße Herstellung von solchen Bauteilen aus thermoplastischem Elastomer im Spritzgussverfahren eröffnet eine große Formenvielfalt in einem kostengünstig umsetzbaren Verfahren.

Der Druck in der Schmelze im Extruderrohr liegt während des Anreicherns der Schmelze mit Gas günstigerweise im Bereich von 250 bar bis 400 bar, vorzugsweise von 300 bar bis 350 bar, wobei 1 bar, wie allgemein bekannt, in SI-Einheiten 10⁵ Pascal entspricht. Zum Anreichern des Gases in der Schmelze wird das Gas günstigerweise über den Injektor mit einem Druck initiiert, welcher vorzugsweise um 20 bar bis 50 bar über dem Druck in der Schmelze im Extruderrohr liegt. Günstigerweise ist vorgesehen, dass beim Anreichern des Gases in der Schmelze im Extruderrohr das Gas zum Teil in der Schmelze gelöst wird und zum Teil in Form von Gasbläschen in die Schmelze eingelagert wird. Diese Gasbläschen in der Schmelze dienen dann beim Aufschäumvorgang in der Spritzgussform als Nukleierungskeime, um so eine möglichst feine und gleichmäßige Porosität bzw. Porenverteilung zumindest im Innenbereich des so hergestellten Bauteils zu erreichen. Dies ist wiederum günstig, um das Bauteil mit möglichst gleichmäßigen und definierten Schwingungsisolierungseigenschaften auszustatten.

Günstigerweise ist vorgesehen, dass ein Großteil des Gases beim Anreichern des Gases in der Schmelze gelöst und nur ein kleiner Teil des Gases in Form von Gasbläschen in die Schmelze eingelagert wird. In diesem Sinne sehen bevorzugte erfindungsgemäße Verfahren vor, dass im Extruderrohr beim Anreichern des Gases in der Schmelze mehr als 90 Gewichts% des Gases und weniger als 100 Gewichts% des Gases in der Schmelze gelöst werden. Die im Extruderrohr in der Schmelze eingelagerten Gasbläschen sind günstigerweise sehr klein. Bevorzugt ist vorgesehen, dass die in der Schmelze eingelagerten Gasbläschen einen Durchmesser kleiner als 0,3 µm aufweisen.

Erfindungsgemäße Verfahren können in unterschiedlichen Ausgestaltungsformen durchgeführt werden. Es können hierzu beim Stand der Technik an sich bekannte Spritzgussmaschinen mit einem entsprechenden Injektor am Extruderrohr eingesetzt werden. Die thermoplastischen Elastomere, aus denen mittels erfindungsgemäßer Verfahren die Bauteile zur Schwingungsisolierung hergestellt werden, sind Elastomere, die sich bei Raumtemperatur wie klassische Vertreter der Elastomere verhalten, jedoch beim Erhitzen verformbar werden. Meist sind dies Copolymere, die aus einer weicheren elastomeren und einer härteren thermoplastischen Komponente bestehen. Zu den thermoplastischen Elastomeren zählen beispielsweise die thermoplastischen Elastomere auf Urethanbasis (TPU), thermoplastische Polyamidelastomere (TPA), thermoplastische Copolyesterelastomere (TPC) oder auch die thermoplastischen Vulkanisate (TPV). Wie allgemein bekannt, können diese thermoplastischen Elastomere aufgeschmolzen und im geschilderten Spritzgussprozess geformt werden, um dann nach dem Abkühlen diese Form beizubehalten. Durch erneute Wärme- und/oder Scherkrafteinwirkung können diese thermoplastischen Elastomere allerdings dann auch wieder aufgeschmolzen, also in eine Schmelze überführt werden. Besonders bevorzugt werden bei erfindungsgemäßen Verfahren zur Herstellung von erfindungsgemäßen Bauteilen, wie sie weiter unten auch noch genauer beschrieben werden, als Ausgangsmaterial thermoplastische Elastomere in Form von TPC oder TPV, besonders bevorzugt in Form von TPA oder TPU, eingesetzt.

Eine erste Möglichkeit der erfindungsgemäßen Ausgestaltung eines entsprechenden Verfahrens sieht vor, dass der Formhohlraum der geschlossenen Spritzgussform beim Einspritzvorgang nur teilweise mit der mit dem Gas angereicherten Schmelze ausgefüllt wird und der Formhohlraum der geschlossenen Spritzgussform bei konstantem Volumen des Formhohlraums dann mittels Druckentlastung der mit dem Gas angereicherten Schmelze durch Aufschäumen der Schmelze vollständig ausgefüllt wird. Bei dieser Ausgestaltungsform erfindungsgemäßer Verfahren wird somit beim Einspritzvorgang der Formhohlraum der geschlossenen Form nur zum Teil gefüllt. Beim und im Anschluss des Einspritzvorgangs kommt es zu einer Druckentlastung in der Schmelze, da der Druck im Formhohlraum der geschlossenen Spritzgussform deutlich geringer ist, als der Einspritzdruck während des Einspritzvorgangs und auch als der Nachdruck im Extruderrohr nach Abschluss des Einspritzvorgangs. Durch diese Druckentlastung bildet sich beim Aufschäumen in der Schmelze die gewünschte Porosität, indem das vorab in der Schmelze gelöste Gas an den in der Schmelze eingelagerten Gasbläschen, welche als Nukleierungskeime dienen, eine entsprechende Porosität bzw. entsprechende Gasblasen in der noch weichen Schmelze bilden. Durch diesen Aufschäumprozess nimmt das Volumen der mit dem Gas angereicherten Schmelze im Formhohlraum zu, sodass nach Abschluss des Aufschäumvorgangs der Formhohlraum vollständig mit der Schmelze ausgefüllt ist. Bei diesem Aufschäumvorgang aus dem Formhohlraum verdrängte Gase bzw. Luft können über beim Stand der Technik an sich bekannte Entlüftungskanten und -kanäle aus der Spritzgussform entweichen. Der Aufschäumvorgang in dem Formhohlraum erfolgt somit günstigerweise ohne Gegendruck oder in anderen Worten frei von Gegendruck. In diesem Zusammenhang ist es günstig, wenn als das Gas Stickstoff verwendet wird. Darüber hinaus ist es auch günstig, wenn die mit dem Gas angereicherte Schmelze mittels eines Heißkanals in den Formhohlraum eingespritzt wird. Besonders günstig ist es in diesem Zusammenhang, wenn eine den Formhohlraum begrenzende Oberfläche der Spritzgussform einen Mittenrauwert Ra im Bereich von 0,6 µm bis 3,6 µm, vorzugsweise von 1,6 µm bis 2,2 µm, aufweist. Der Mittenrauwert Ra kann dabei gemäß DIN-EN ISO 4287/2010 bestimmt werden.

Eine andere Art und Weise erfindungsgemäße Verfahren umzusetzen, besteht darin, dass der Formhohlraum der geschlossenen Spritzgussform beim Einspritzvorgang vollständig mit der mit dem Gas angereicherten Schmelze ausgefüllt wird und anschließend der Formhohlraum der geschlossenen Spritzgussform zum Aufschäumen der Schmelze vergrößert wird. Auch bei diesem Verfahren kann aus dem Formhohlraum der Spritzgussform verdrängtes Gas bzw. Luft über entsprechende Entlüftungskanten und/oder -kanäle, wie sie beim Stand der Technik an sich bekannt sind, aus dem Formhohlraum der Spritzgussform entweichen. Auch dieses Verfahren kann somit ohne Gegendruck bzw. frei von Gegendruck durchgeführt werden. Besonders bevorzugt ist bei solchen Verfahren vorgesehen, dass zum Vergrößern des Formhohlraums zumindest ein, den Formhohlraum begrenzender Wandbereich der geschlossenen Spritzgussform relativ zu zumindest einem anderen, den Formhohlraum begrenzenden Wandbereich der Spritzgussform bewegt wird. Das Vergrößern eines Formhohlraums einer Spritzgussform ist an sich bekannt und wird beim Stand der Technik z.B. in Form eines sogenannten Kernzugs umgesetzt, wobei der gezogene Kern dann eben der Wandbereich der geschlossenen Spritzgussform ist, welcher relativ zu dem anderen Wandbereich der Spritzgussform bewegt wird.

Bei diesen Varianten der Erfindung entspricht die relative Volumenvergrößerung des Formhohlraums, in Prozent angegeben, im Wesentlichen dem angestrebten Schäumgrad im Innenbereich des Bauteils. Soll also z.B. im Innenbereich des erfindungsgemäß hergestellten Bauteils ein Schäumgrad von 55% erreicht werden, so wird bei diesen Varianten des erfindungsgemäßen Verfahrens der Formhohlraum der geschlossenen Spritzgussform beim Aufschäumen der Schmelze um 55% vergrößert. Auch hier wird günstigerweise Stickstoff als das Gas verwendet. Genauso gut ist es auch hier günstig, wenn die den Formhohlraum begrenzende Oberfläche der Spritzgussform einen Mittenrauwert Ra im Bereich von 0,6 µm bis 3,6 µm, vorzugsweise von 1,6 µm bis 2,6 µm, aufweist. Darüber hinaus ist bevorzugt auch bei dieser Variante des Verfahrens vorgesehen, dass die mit dem Gas angereicherte Schmelze mittels eines Heißkanals in den Formhohlraum eingespritzt wird.

Die bei erfindungsgemäßen Verfahren eingesetzten Spritzgussformen können wie beim Stand der Technik ausgebildet werden. In der Regel besteht die Spritzgussform aus zumindest zwei Teilen, welche im geschlossenen Zustand der Spritzgussform so miteinander verbunden sind, dass die Schmelze in den Formhohlraum eingespritzt werden kann. Nach dem Aufschäumvorgang und dem Aushärten der Schmelze wird die Spritzgussform geöffnet, sodass das fertig hergestellte Bauteil entnommen bzw. ausgeworfen werden kann. Dies muss nicht weiter erläutert werden, da dies beim Stand der Technik beim Spritzgussverfahren an sich bekannt ist.

Ein Bauteil zur Schwingungsisolierung aus einem thermoplastischen Elastomer kann einen Porenraum mit einer Vielzahl von, vorzugsweise geschlossenen, Poren aufweisen, wobei das Bauteil zumindest in einem Innenbereich des Bauteils einen Schäumgrad im Wertebereich von 30% bis 70%, vorzugsweise von 50% bis 60%, aufweist. Solche Bauteile können insbesondere mit erfindungsgemäßen Verfahren hergestellt werden. Bei solchen Bauteilen bildet das thermoplastische Elastomer eine Art Matrix, in die die durch den Aufschäumvorgang entstandenen Poren eingelagert sind. Die Poren sind somit günstigerweise mit Stickstoff gefüllt. Der Schäumgrad ist dabei ein Maß für die im fertigen Bauteil entstandene Porosität. Der Porendurchmesser der Poren im fertig hergestellten Bauteil liegt im genannten Innenbereich des Bauteils vorzugsweise in der Größenordnung zwischen 20 µm (Mikrometer) und 800 µm, vorzugsweise zwischen 40 µm und 400 µm.

Besonders bevorzugt ist vorgesehen, dass das Bauteil an seiner Oberfläche, vorzugsweise vollständig, von einer Außenhaut umgeben ist, welche einen geringeren Schäumgrad als der von der Außenhaut umgebene Innenbereich des Bauteils aufweist. Diese Außenhaut entsteht günstigerweise beim Abkühlprozess an der Oberfläche des Bauteils, also an der Kontaktfläche der Schmelze zu den, den Formhohlraum umgebenden Wandbereichen der Spritzgussform. Die Außenhaut ist günstigerweise relativ dünn.

Sie weist bevorzugt eine Dicke im Bereich von 0,2 mm bis 5 mm, vorzugsweise von 0,5 mm bis 2 mm auf. Besonders bevorzugt weist die Außenhaut eine Dicke im Bereich von 0,1 mm bis 1 mm, vorzugsweise von 0,2 mm bis 0,7 mm auf. In dem von der Außenhaut umgebenen Innenbereich des Bauteils weist das Bauteil günstigerweise überall den genannten Schäumgrad auf.

Besonders bevorzugt handelt es sich bei den genannten Bauteilen um relativ kleine Bauteile. In diesem Sinne ist günstigerweise vorgesehen, dass das Bauteil ein Bauteilgewicht im Bereich von 0,1 g bis 1000 g, vorzugsweise von 0,5 g bis 500 g, besonders bevorzugt von 2 g bis 100 g aufweist.

Bei bevorzugten Varianten ist darüber hinaus günstigerweise vorgesehen, dass das Bauteil einen dynamischen Elastizitätsmodul aufweist, welcher das 1,2-fache bis 3,5-fache, vorzugsweise das 1,4-fache bis 2,5-fache, besonders bevorzugt das 1,5-fache bis 2-fache, eines statischen Elastizitätsmoduls des Bauteils beträgt. Der statische Elastizitätsmodul wird dabei günstigerweise nach ISO 3386-2:1997-06 bestimmt. Der dynamische Elastizitätsmodul wird günstigerweise nach DIN 53513 1990-03 ausgewertet. Dabei sollten bei der Bestimmung des statischen Elastizitätsmoduls die identischen Lastbedingungen wie bei der Bestimmung des dynamischen Elastizitätsmoduls vorliegen.

In der nachfolgenden Figurenbeschreibung werden beispielhaft weitere Details von bevorzugten Ausgestaltungsformen der Erfindung erläutert. Es zeigen:
- Fig. 1: einen schematisierten Längsschnitt durch eine Spritzgussmaschine, welche für das erfindungsgemäße Verfahren eingesetzt werden kann;
- Fig. 2 bis 4: eine schematisierte Darstellung der Spritzgussform zur Erläuterung einer ersten Ausgestaltungsmöglichkeit des Verfahrens;
- Fig. 5 bis 7: eine schematisierte Darstellung der Spritzgussform zur Erläuterung einer zweiten Ausgestaltungsform des erfindungsgemäßen Verfahrens und
- Fig. 8: einen schematisierten Längsschnitt durch ein Bauteil.

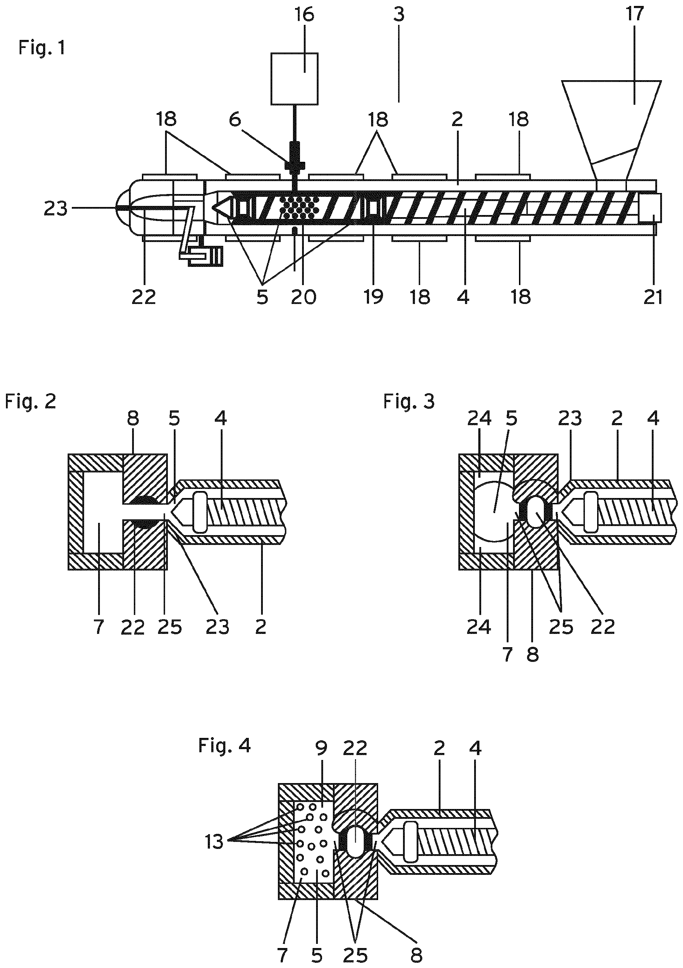

Fig. 1 zeigt einen Längsschnitt durch eine an sich bekannte, schematisiert dargestellte Spritzgussmaschine 3. Das zu verarbeitende thermoplastische Elastomer gelangt über den Vorratstrichter 17 in das Extruderrohr 2 der Spritzgussmaschine 3. In der Regel liegt das thermoplastische Elastomermaterial im Vorratstrichter 17 in Form eines Granulats vor. Im Extruderrohr 2 befindet sich die Extruderschnecke 4, welche mittels des Schneckenantriebs 21 im Extruderrohr 2 um ihre Längsachse gedreht und in Richtung ihrer Längsachse, insbesondere auch zur Durchführung des Einspritzvorgangs, verschoben werden kann. Außen am Extruderrohr 2 befinden sich Heizelemente 18, mit denen das Extruderrohr 2 und damit auch dessen Innenraum, in dem sich die Extruderschnecke 4 und das zu verarbeitende Material befinden, geheizt werden können.

Das Kunststoffmaterial im Einfülltrichter 17, also im vorliegenden Fall das thermoplastische Elastomer, wird, wie an sich bekannt, durch Rotieren der Extruderschnecke 4 und durch Heizen mittels der Heizelemente 18 zu einer Schmelze 5 aufgeschmolzen. Die Schmelze 5 passiert im Extruderrohr 2 die Rückstromsperre 19 und wird somit von der Extruderschnecke 4 in den Bereich des Injektors 6 gefördert. Mittels des Injektors 6 wird der Schmelze 5 im Extruderrohr 2 Gas zugeführt. Der an sich bekannte Mischer 20 hilft beim Anreichern des Gases in der Schmelze 5. Das Gas wird dem Injektor 6 von einer hier nur schematisiert dargestellten Druckgasquelle 16 aus zugeführt. Als Gas wird bei erfindungsgemäßen Verfahren bevorzugt Stickstoff verwendet.

Ist eine ausreichend große Menge von Schmelze 5 produziert und mit einer ausreichenden Menge an Gas angereichert worden, so erfolgt, wie an sich bekannt, der Einspritzvorgang, indem das hier in Form eines Nadelverschlusses ausgebildete Ventil 22 geöffnet und die Extruderschnecke 4 unter entsprechend hohem Druck in Richtung hin zur Einspritzdüse 23 des Extruderrohrs 2 bewegt wird. Hierdurch wird die mit Gas angereicherte Schmelze 5 aus dem Extruderrohr 2 in die in Fig. 1 nicht dargestellte Spritzgussform 8 bzw. in deren Formhohlraum 7 eingespritzt. Solche Spritzgussmaschinen 3 wie auch die bislang geschilderten Verfahrensschritte sind an sich bekannt und müssen nicht weiter erläutert werden.

Bei erfindungsgemäßen Verfahren befindet sich die Schmelze 5 im Extruderrohr 2 während des Begasens günstigerweise in einem Druckbereich von 250 bar bis 400 bar, vorzugsweise von 300 bar bis 350 bar. Die Injektion des Gases in die Schmelze 5 erfolgt günstigerweise mit einem relativ dazu angelegten Überdruck von 20 bar bis 50 bar. Die pro Volumeneinheit der Schmelze 5 jeweils benötigte Gasmenge kann in Abhängigkeit des zu erzielenden Schäumgrades errechnet werden. Die Einspritzdrücke während des Einspritzvorgangs liegen günstigerweise in einem Größenbereich von 600 bar bis 1500 bar, vorzugsweise von 800 bar bis 1300 bar. Unmittelbar nach dem Einspritzvorgang wird mittels der Extruderschnecke 4 im Extruderrohr 2 günstigerweise ein Nachdruck im Bereich von 50 bar bis 300 bar, vorzugsweise von 100 bar bis 200 bar, aufrecht erhalten, bis das Ventil 22, also hier in Fig. 1 der Nadelverschluss die Einspritzdüse 23 wieder verschließt.

Wie eingangs bereits erläutert, ist günstigerweise vorgesehen, dass das Gas beim Anreichern des Gases in der Schmelze 5 im Extruderrohr 2 günstigerweise zum Großteil in der Schmelze 5 gelöst wird. Ein kleiner Teil des Gases sollte aber günstigerweise als sehr kleine Gasbläschen in der Schmelze 5 eingelagert werden, um später nach dem Einspritzvorgang im Formhohlraum 7 der Spritzgussform 8 als Nukleierungskerne für die Porenbildung durch Ausgasen des gelösten Anteils des Gases aus der Schmelze 5 dienen zu können. Mit diesen Nukleierungskeimen wird erreicht, dass ein sehr feinzelliger Porenraum im Endprodukt, also im letztendlich hergestellten Bauteil 1, erzeugt wird. Zur bevorzugten Größe der Gasbläschen in der Schmelze 5 im Extruderrohr 2 und auch zum Anteil des in der Schmelze 5 gelösten Gases und des in Form der Gasbläschen eingelagerten Gases wird auf die Ausführungen weiter oben verwiesen.

Anhand der Fig. 2 bis 4 wird nun eine erste Variante des erfindungsgemäßen Verfahrens geschildert, bei dem das Volumen der mit dem Gas angereicherten und in die Spritzgussform 8 eingespritzten Schmelze 5 durch Aufschäumen im Formhohlraum 7 der Spritzgussform 8 vergrößert wird, bis am Ende des Aufschäumvorgangs zumindest in einem Innenbereich 9 des Bauteils 1 ein Schäumgrad im Wertebereich von 30% bis 70%, vorzugsweise von 50% bis 60%, erreicht wird. Der Schäumgrad ist dabei, wie gesagt, ein Maß für die im Endprodukt, also im Bauteil 1 erzielte Porosität.

Die Fig. 2 bis 4 zeigen jeweils schematisierte Längsschnitte durch die geschlossene Spritzgussform 8 und den sich darin befindlichen Formhohlraum 7, in den die mit Gas angereicherte Schmelze 5 eingespritzt wird. Zu sehen ist in den Fig. 2 bis 4 auch jeweils das Ventil 22, auch wenn es hier nicht als Nadelverschluss, dargestellt ist. Dargestellt ist in den Fig. 2 bis 4 auch das vordere Ende des Extruderrohrs 2, welches mit seiner Einspritzdüse 23 an den Einspritzkanal 25 der geschlossenen Spritzgussform 8 angedockt ist. Zu sehen ist auch die sich im Extruderrohr 2 befindende Extruderschnecke 4. Bei dieser ersten, anhand der Fig. 2 bis 4 geschilderten, Variante des erfindungsgemäßen Verfahrens bleibt das Volumen des Formhohlraums 7 während des gesamten Verfahrens konstant, solange eben die Spritzgussform 8 geschlossen bleibt. Die Einspritzdüse 23 und der Einspritzkanal 25 bilden günstigerweise einen sogenannten Heißkanal. Hierdurch wird erreicht, dass die mit dem Gas angereicherte Schmelze 5 mittels des Heißkanals in den Formhohlraum 7 eingespritzt wird, ohne dabei unnötig abzukühlen.

Fig. 2 zeigt den Zustand, bei dem bei geöffnetem Ventil 22 das Einspritzen der mit Gas angereicherten Schmelze 5 erfolgt. Vor dem Einspritzen ist der Formhohlraum 7 in der Regel vollständig mit Luft gefüllt. Die beim Einspritzvorgang aus dem Formhohlraum 7 verdrängte Luft kann durch an sich bekannte, hier nicht dargestellte Entlüftungskanten und - kanäle der Spritzgussform 8 aus dem Formhohlraum 7 nach außen entweichen. In der ersten Variante eines erfindungsgemäßen Verfahrens wird der Formhohlraum 7 der geschlossenen Spritzgussform 8 beim Einspritzvorgang nur teilweise mit der, mit dem Gas angereicherten Schmelze 5 ausgefüllt. Im Formhohlraum 7 erfolgt dann eine Druckentlastung, was zu einem Aufschäumen der Schmelze 5 im Formhohlraum 7 führt.

In Fig. 3 ist schematisiert dargestellt, dass die Schmelze 5 auch nach Abschluss des Einspritzvorgangs nur einen Teil des Volumens des Formhohlraums 7 ausfüllt und die mit 24 gekennzeichneten Restvolumina beim Einspritzvorgang frei von Schmelze 5 bleiben. Durch den Aufschäumvorgang in dem Formhohlraum 7 wird dann der gesamte Formhohlraum 7 nach und nach mit Schmelze 5 gefüllt. Beim Aufschäumen wird die Luft aus dem Restvolumen 24 durch die Entlüftungskanten und -kanäle in der Spritzgussform 8 aus dem Formhohlraum 7 herausgedrückt. Der Aufschäumvorgang der Schmelze 5 im Formhohlraum 7 erfolgt dabei ohne Gegendruck oder in anderen Worten frei von Gegendruck, da die verdrängte Luft durch die an sich bekannten Entlüftungskanten und -kanäle der Spritzgussform 8 aus dem Formhohlraum 7 nach außen entweichen kann. Günstig ist in diesem Zusammenhang auch, wenn die den Formhohlraum 7 begrenzende Oberfläche der Spritzgussform 8 die eingangs genannten Mittenrauwerte Ra aufweist. Gleichzeitig bildet sich durch das Aufschäumen der Porenraum in der Schmelze 5 mit einer Vielzahl von, vorzugsweise geschlossenen, Poren 13 im Innenbereich 9 des so im Formhohlraum 7 hergestellten Bauteils 1. Während des Aufschäumvorgangs bleibt das Ventil 22 günstigerweise geschlossen, so wie dies in Fig. 3 und 4 dargestellt ist. Im Extruderrohr 2 kann bei geschlossenem Ventil 22 dann parallel bereits die mit Gas angereicherte Schmelze 5 für den nächsten Einspritzvorgang in der geschilderten Art und Weise aufbereitet werden.

Fig. 4 zeigt schematisiert den Endzustand nach vollständigem Aufschäumen, wenn die Schmelze 5 den gesamten Formhohlraum 7 ausgefüllt hat und in der Schmelze 5 die in Fig. 4 nur schematisiert dargestellten Poren 13 entstanden sind. Durch Abkühlen der Schmelze 5 an den, den Formhohlraum 7 begrenzenden Wandbereichen der Spritzgussform 8, härtet die Schmelze 5 aus, sodass das erfindungsgemäß hergestellte Bauteil 1 mit dem entsprechenden Schäumgrad in seinem Innenbereich 9 entsteht. Bei diesem Abkühlvorgang bildet sich günstigerweise eine Außenhaut 15 an der Oberfläche 14, mit der die Schmelze 5 bzw. das Bauteil 1 an den Wandbereichen der Spritzgussform 8 anliegt. Diese Außenhaut 15 weist günstigerweise einen geringeren Schäumgrad als der von ihr umgebene Innenbereich 9 des Bauteils 1 auf. Ist das Bauteil vollständig ausgekühlt, so wird die Spritzgussform in der an sich bekannten, hier nicht gezeigten Art und Weise geöffnet und das erzeugte Bauteil 1 ausgeworfen. Nach dem Wiederverschließen der Spritzgussform 8 kann dann der geschilderte Vorgang wiederholt werden, um ein neues Bauteil 1 herzustellen.

Wenn der Einspritzkanal 25, durch den hindurch die mit Gas angereicherte Schmelze 5 in den Formhohlraum 7 eingespritzt wird, entsprechend ausgebildet ist, kann gegebenenfalls auch auf das Ventil 22 verzichtet werden. Dies ist insbesondere dann der Fall, wenn die Schmelze 5 im Einspritzkanal 25 entsprechend schnell aushärtet und so den Einspritzkanal 25 während des Aufschäumvorgangs im Formhohlraum 7 in Richtung hin zum Extruderrohr 2 verschließt.

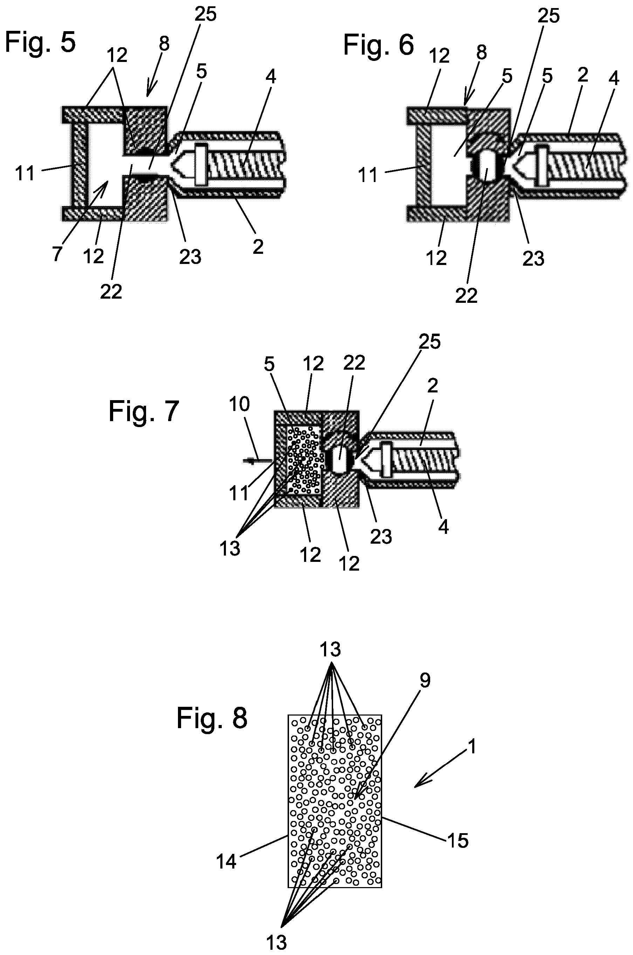

Anhand der Fig. 5 bis 7 wird nachfolgend eine zweite Variante des erfindungsgemäßen Verfahrens geschildert. Bei dieser ist vorgesehen, dass der Formhohlraum 7 der geschlossenen Spritzgussform 8 beim Einspritzvorgang vollständig mit der mit dem Gas angereicherten Schmelze 5 ausgefüllt wird und anschließend der Formhohlraum 7 der geschlossenen Spritzgussform 8 zum Aufschäumen der Schmelze 5 vergrößert wird. Dies geschieht in diesem Beispiel ebenfalls dadurch, dass zum Vergrößern des Formhohlraums 7 der, den Formhohlraum 7 begrenzende Wandbereich 11 der geschlossenen Spritzgussform 8 relativ zu den Wandbereichen 12 der Spritzgussform 8 bewegt wird. Dieses Vergrößern des Formhohlraums 7 der geschlossenen Spritzgussform 8 ist an sich beim Stand der Technik bekannt und wird z.B. als Kernzug bezeichnet. Gemäß der Erfindung wird dies aber nun dazu genutzt, den Aufschäumprozess im Formhohlraum 7 in der Schmelze 5 zu initiieren. Die relative Volumenvergrößerung im Formhohlraum 7 kann dabei letztendlich dem zu erzielenden Schäumgrad entsprechen.

In den Fig. 5 bis 7 sind wiederum Schnitte durch die Spritzgussform 8 und den Formhohlraum 7 gezeigt. Dargestellt ist zusätzlich das an die geschlossene Spritzgussform 8 angeschlossene Extruderrohr 2 mit der darin befindlichen Extruderschnecke 4. Auch in diesem Beispiel ist ein Ventil 22 vorgesehen, mit dem der Einspritzkanal 25 zwischen dem Extruderrohr 2 und der Spritzgussform 8 verschlossen werden kann.

Fig. 5 zeigt die Stellung, bei der bei dieser Variante des erfindungsgemäßen Verfahrens die mit Gas angereicherte Schmelze 5 bei geöffnetem Ventil 22 in den Formhohlraum 7 eingespritzt wird. Dabei wird der Formhohlraum 7 vollständig mit Schmelze 5 gefüllt. Die im Formhohlraum 7 vorab vorhandene Luft wird wiederum durch in der Spritzgussform 8 vorhandene, hier aber nicht dargestellte Entlüftungskanten und -kanäle abgeführt.

Ist der Formhohlraum 7 dann am Ende des Einspritzvorgangs vollständig mit, mit Gas angereicherter Schmelze 5 gefüllt, so wird, wie in Fig. 6 gezeigt, das Ventil 22 geschlossen. Anschließend wird durch Relativbewegungen der Wandbereiche 11 und 12 zueinander, wie in Fig. 7 dargestellt, das Volumen des Formhohlraums 7 vergrößert. Der Pfeil 10 zeigt die Zugrichtung, in der der Wandbereich 11 bewegt wird. Durch diese Volumenvergrößerung des Formhohlraums 7 kommt es zu einer Druckentlastung in der mit Gas angereicherten Schmelze 5 im Formhohlraum 7 und damit zu einem Aufschäumen der Schmelze 5. Auch hier dient der Anteil des Gases, welcher in Form von Gasbläschen in der Schmelze vorhanden ist, als Nukleierungskeime, sodass auch bei diesem Verfahren eine möglichst feinzellige Porenraumstruktur entsteht. Der Großteil des die Poren 13 bildenden Gases ist aber, wie auch in der anderen Verfahrensvariante geschildert, vorab in der Schmelze in gelöster Form vorhanden. Die Vergrößerung des Formhohlraums 7 wird dann beendet, wenn der Formhohlraum 7 die Größe erreicht hat, die das herzustellende Bauteil 1 haben soll. Auch hier bildet sich bevorzugt beim Abkühlprozess an der den Wandbereichen 11 und 12 der Spritzgussform 8 zugewandten Oberflächen 14 des Bauteils 1 eine Außenhaut 15, welche einen geringeren Schäumgrad aufweist, als der Innenbereich 9 des Bauteils 13. Wenn die Schmelze 5 und damit das Bauteil 1 dann entsprechend weit abgekühlt ist, kann die Spritzgussform 8 in an sich bekannter Art und Weise geöffnet und das Bauteil 1 ausgeworfen werden. Anschließend steht die Spritzgussform 8 wieder für einen neuen Einspritzvorgang zur Verfügung.

Auch bei dieser Variante wäre es grundsätzlich denkbar, das Ventil 22 wegzulassen, wenn durch entsprechend rasch auskühlende Schmelze 5 der Einspritzkanal 25 der Spritzgussform 8 entsprechend rasch verschlossen wird.

Fig. 8 zeigt nun noch schematisiert einen Schnitt durch ein fertiggestelltes Bauteil 1. Im von der Außenhaut 15 umgebenen Innenbereich 9 des Bauteils 1 ist eine entsprechend hohe Anzahl von Poren 13 ausgebildet worden. Es handelt sich günstigerweise um eine geschlossene Porosität. Durch den Porenraum hat sich erfindungsgemäß ein Schäumgrad im Wertebereich von 30% bis 70%, vorzugsweis von 50% bis 60% ausgebildet. Die Dichten des Bauteils 1, also des Endprodukts des erfindungsgemäßen Verfahrens liegen günstigerweise im Bereich zwischen 300 g/dm³ und 850 g/dm³, besonders bevorzugt im Bereich von 450 g/dm³ bis 650 g/dm³. Die Poren 13 sind bevorzugt mit Stickstoff gefüllt. Es handelt sich bei den Bauteilen 1 günstigerweise um relativ kleine Bauteile, bevorzugt mit einem Bauteilgewicht im Bereich von 0,1 g bis 1000 g, bevorzugt von 0,5g bis 500g, besonders bevorzugt von 2 g bis 100 g.

### Legende

### Zu den Hinweisziffern

- 1: Bauteil
- 2: Extruderrohr
- 3: Spritzgussmaschine
- 4: Extruderschnecke
- 5: Schmelze
- 6: Injektor
- 7: Formhohlraum
- 8: Spritzgussform
- 9: Innenbereich
- 10: Zugrichtung
- 11: Wandbereich
- 12: Wandbereich
- 13: Pore
- 14: Oberfläche
- 15: Außenhaut
- 16: Druckgasquelle
- 17: Vorratstrichter
- 18: Heizelement
- 19: Rückstromsperre
- 20: Mischer
- 21: Scheckenantrieb
- 22: Ventil
- 23: Einspritzdüse
- 24: Restvolumen
- 25: Einspritzkanal

## Patentansprüche

1. Verfahren zur Herstellung von Bauteilen (1) aus einem thermoplastischen Elastomer, wobei das thermoplastische Elastomer in einem Extruderrohr (2) einer Spritzgussmaschine (3) unter Wärmezufuhr und Einwirkung einer Extruderschnecke (4) der Spritzgussmaschine (3) zu einer Schmelze (5) aufgeschmolzen wird und der Schmelze (5) im Extruderrohr (2) über einen Injektor der Spritzgussmaschine (3) Gas zugeführt und die Schmelze (5) mit dem Gas im Extruderrohr (2) angereichert und die mit dem Gas angereicherte Schmelze (5) anschließend in einem Einspritzvorgang aus dem Extruderrohr (2) in einen Formhohlraum (7) einer geschlossenen Spritzgussform (8) der Spritzgussmaschine (3) eingespritzt wird, wobei das Volumen der mit dem Gas angereicherten und in die Spritzgussform (8) eingespritzten Schmelze (5) durch Aufschäumen in der Spritzgussform (8) vergrößert und damit am Ende des Aufschäumvorgangs zumindest in einem Innenbereich (9) des Bauteils (1) ein Schäumgrad im Wertebereich von 30% bis 70%, vorzugsweise von 50% bis 60%, erreicht wird, **dadurch gekennzeichnet, dass** im Extruderrohr (2) beim Anreichern des Gases in der Schmelze (5) das Gas zum Teil in der Schmelze (5) gelöst und zum Teil in Form von Gasbläschen in die Schmelze (5) eingelagert wird.

2. Verfahren nach Anspruch 1, **dadurch gekennzeichnet, dass** im Extruderrohr (2) beim Anreichern des Gases in der Schmelze (5) mehr als 90 Gewichts% des Gases und weniger als 100 Gewichts% des Gases in der Schmelze (5) gelöst werden.

3. Verfahren nach Anspruch 1 oder 2, **dadurch gekennzeichnet, dass** die in der Schmelze (5) eingelagerten Gasbläschen einen Durchmesser kleiner als 0,3 µm aufweisen.

4. Verfahren nach einem der Ansprüche 1 bis 3, **dadurch gekennzeichnet, dass** der Formhohlraum (7) der geschlossenen Spritzgussform (8) beim Einspritzvorgang nur teilweise mit der mit dem Gas angereicherten Schmelze (5) ausgefüllt wird und der Formhohlraum (7) der geschlossenen Spritzgussform (8) bei konstantem Volumen des Formhohlraums (7) dann mittels Druckentlastung der mit dem Gas angereicherten Schmelze (5) durch Aufschäumen der Schmelze (5) vollständig ausgefüllt wird.

5. Verfahren nach einem der Ansprüche 1 bis 3, **dadurch gekennzeichnet, dass** der Formhohlraum (7) der geschlossenen Spritzgussform (8) beim Einspritzvorgang vollständig mit der mit dem Gas angereicherten Schmelze (5) ausgefüllt wird und anschließend der Formhohlraum (7) der geschlossenen Spritzgussform (8) zum Aufschäumen der Schmelze (5) vergrößert wird.

6. Verfahren nach Anspruch 5, **dadurch gekennzeichnet, dass** zum Vergrößern des Formhohlraums (7) zumindest ein, den Formhohlraum (7) begrenzender Wandbereich (11) der geschlossenen Spritzgussform (8) relativ zu zumindest einem anderen, den Formhohlraum (7) begrenzenden Wandbereich (12) der Spritzgussform (8) bewegt wird.

7. Verfahren nach einem der Ansprüche 1 bis 6, **dadurch gekennzeichnet, dass** als das Gas Stickstoff verwendet wird.

8. Verfahren nach einem der Ansprüche 1 bis 7, **dadurch gekennzeichnet, dass** die mit dem Gas angereicherte Schmelze (5) mittels eines Heißkanals in den Formhohlraum (7) eingespritzt wird.

9. Verfahren nach einem der Ansprüche 1 bis 8, **dadurch gekennzeichnet, dass** eine den Formhohlraum (7) begrenzende Oberfläche der Spritzgussform (8) einen Mittenrauwert Ra im Bereich von 0,6 µm bis 3,6 µm, vorzugsweise von 1,6 µm bis 2,2 µm, aufweist.

## Claims

1. Method for producing components (1) from a thermoplastic elastomer material, wherein the thermoplastic elastomer material is molten in an extruder pipe (2) of an injection-molding machine (3) with the supply of heat and action of an extruder screw (4) of the injection-molding machine (3) to form a melt (5) and gas is supplied to the melt (5) in the extruder pipe (2) via an injector of the injection-molding machine (3) and the melt (5) is enriched with the gas in the extruder pipe (2) and the melt (5) which is enriched with the gas is subsequently injected in an injection operation from the extruder pipe (2) into a mold cavity (7) of a closed injection mold (8) of the injection-molding machine (3), wherein the volume of the melt (5) which is enriched with the gas and injected into the injection mold (8) is increased by foaming in the injection mold (8) and consequently at the end of the foaming operation at least in an inner region (9) of the component (1) a degree of foaming in the value range from 30 % to 70 %, preferably from 50 % to 60 %, is achieved, **characterized in that** in the extruder pipe (2), when the gas is enriched in the melt (5), the gas is partially dissolved in the melt (5) and is partially dispersed in the melt (5) in the form of gas bubbles.

2. Method according to claim 1, **characterized in that** in the extruder pipe (2), when the gas is enriched in the melt (5), more than 90 % by weight of the gas and less than 100 % by weight of the gas is dissolved in the melt (5).

3. Method according to claim 1 or 2, **characterized in that** the gas bubbles which are dispersed in the melt (5) have a diameter of less than 0.3 µm.

4. Method according to any one of claims 1 to 3, **characterized in that** the mold cavity (7) of the closed injection mold (8) is filled only partially during the injection operation with the melt (5) enriched with the gas and the mold cavity (7) of the closed injection mold (8) with a constant volume of the mold cavity (7) is then completely filled by means of pressure relief of the melt (5) enriched with the gas by foaming of the melt (5).

5. Method according to any one of claims 1 to 3, **characterized in that** the mold cavity (7) of the closed injection mold (8) is filled completely during the injection operation with the melt (5) which is enriched with the gas and subsequently the mold cavity (7) of the closed injection mold (8) is increased in order to foam the melt (5).

6. Method according to claim 5, **characterized in that** in order to increase the mold cavity (7) at least one wall region (11), which delimits the mold cavity (7), of the closed injection mold (8) is moved relative to at least one other wall region (12), which delimits the mold cavity (7), of the injection mold (8).

7. Method according to any one of claims 1 to 6, **characterized in that** nitrogen is used as the gas.

8. Method according to any one of claims 1 to 7, **characterized in that** the melt (5) which is enriched with the gas is injected into the mold cavity (7) by means of a hot channel.

9. Method according to any one of claims 1 to 8, **characterized in that** a surface, which delimits the mold cavity (7), of the injection mold (8) has an average roughness value Ra in the range from 0.6 µm to 3.6 µm, preferably from 1.6 µm to 2.2 µm.

## Revendications

1. Procédé pour la fabrication de composants (1) en un élastomère thermoplastique, l'élastomère thermoplastique étant fondu dans un tube d'extrudeuse (2) d'une machine de moulage par injection (3) sous apport de chaleur et sous l'action d'une vis d'extrusion (4) de la machine de moulage par injection (3) pour obtenir une masse fondue (5), et la masse fondue (5) étant alimentée en un gaz dans le tube d'extrudeuse (2) via un injecteur de la machine de moulage par injection (3), et la masse fondue (5) étant enrichie avec le gaz dans le tube d'extrudeuse (2), et la masse fondue (5) enrichie avec le gaz étant ensuite injectée, lors d'une opération d'injection, depuis le tube d'extrudeuse (2) dans une cavité de moule (7) d'un moule de moulage par injection fermé (8) de la machine de moulage par injection (3), le volume de la masse fondue (5) enrichie avec le gaz et injectée dans le moule de moulage par injection (8) étant augmenté par moussage dans le moule de moulage par injection (8), et ainsi, à la fin de l'opération de moussage, au moins dans une zone intérieure (9) du composant (1), un degré de moussage compris dans une plage de valeurs allant de 30 % à 70 %, de préférence de 50 % à 60 %, étant atteint, **caractérisé en ce que,** dans le tube d'extrudeuse (2), lors de l'enrichissement de la masse fondue (5) avec le gaz, le gaz est en partie dissous dans la masse fondue (5) et en partie incorporé dans la masse fondue (5) sous forme de bulles de gaz.

2. Procédé selon la revendication 1, **caractérisé en ce que,** dans le tube d'extrudeuse (2), lors de l'enrichissement de la masse fondue (5) avec le gaz, plus de 90 % en poids du gaz et moins de 100 % en poids du gaz sont dissous dans la masse fondue (5).

3. Procédé selon la revendication 1 ou 2, **caractérisé en ce que** les bulles de gaz incorporées dans la masse fondue (5) présentent un diamètre inférieur à 0,3 µm.

4. Procédé selon l'une des revendications 1 à 3, **caractérisé en ce que** la cavité de moule (7) du moule de moulage par injection fermé (8), lors de l'opération d'injection, n'est remplie que partiellement avec la masse fondue (5) enrichie avec le gaz, et la cavité de moule (7) du moule de moulage par injection fermé (8) est ensuite remplie complètement, à volume constant de la cavité de moule (7), par détente de pression de la masse fondue (5) enrichie avec le gaz, par moussage de la masse fondue (5).

5. Procédé selon l'une des revendications 1 à 3, **caractérisé en ce que** la cavité de moule (7) du moule de moulage par injection fermé (8), lors de l'opération d'injection, est remplie complètement avec la masse fondue (5) enrichie avec le gaz, et ensuite la cavité de moule (7) du moule de moulage par injection fermé (8) est agrandie pour faire mousser la masse fondue (5).

6. Procédé selon la revendication 5, **caractérisé en ce que,** pour agrandir la cavité de moule (7), au moins une zone de paroi (11) du moule de moulage par injection fermé (8) limitant la cavité de moule (7) est déplacée par rapport à au moins une autre zone de paroi (12) du moule de moulage par injection (8) limitant la cavité de moule (7).

7. Procédé selon l'une des revendications 1 à 6, **caractérisé en ce que** de l'azote est utilisé comme gaz.

8. Procédé selon l'une des revendications 1 à 7, **caractérisé en ce que** la masse fondue (5) enrichie avec le gaz est injectée dans la cavité de moule (7) au moyen d'un canal chaud.

9. Procédé selon l'une des revendications 1 à 8, **caractérisé en ce qu'une** surface limitant la cavité de moule (7) du moule de moulage par injection (8) présente une rugosité moyenne Ra dans la plage allant de 0,6 µm à 3,6 µm, de préférence de 1,6 µm à 2,2 µm.
